Europäisches Patentamt

European Patent Office

Office européen des brevets

(19)

(11) **EP 1 503 551 A2**

(12) **DEMANDE DE BREVET EUROPEEN**

(43) Date de publication:
02.02.2005 Bulletin 2005/05

(51) Int Cl.⁷: $H04L\ 12/56$

(21) Numéro de dépôt: 04291914.2

(22) Date de dépôt: 27.07.2004

(84) Etats contractants désignés:
AT BE BG CH CY CZ DE DK EE ES FI FR GB GR
HU IE IT LI LU MC NL PL PT RO SE SI SK TR
Etats d'extension désignés:
AL HR LT LV MK

(30) Priorité: 29.07.2003 FR 0309286

(71) Demandeur: ALCATEL
75008 Paris (FR)

(72) Inventeurs:
• Dauchy, Philippe
75014 Paris (FR)

• Conte, Alberto
75014 Paris (FR)
• Wang, Yuke
Plano, TX 75074 (US)
• Krishnamurthy, Arnaud
Richardson, TX 75080 (US)

(74) Mandataire: Lamoureux, Bernard et al
COMPAGNIE FINANCIERE ALCATEL
Département Propriété Industrielle
54, rue La Boétie
75008 Paris (FR)

(54) **Traitement de paquets de données adaptable en fonction de l'état de charge interne, en vue d'un routage dans une architecture QoS**

(57) Un routeur (RP), d'un réseau de communications (N), par exemple à protocole internet, comprend des moyens de traitement (MT) chargés de déterminer son état de charge interne et, à réception d'un flux de paquets de données associé à une classe de trafic, d'allouer au flux reçu certaines ressources internes du routeur en fonction de la classe de trafic du flux et de l'état de charge déterminé dudit routeur.

FIG.1

EP 1 503 551 A2

## Description

L'invention concerne le domaine des réseaux de communications capables de traiter des flux de paquets de données et des agrégats de flux, et plus précisément ceux qui présentent une architecture permettant de gérer la qualité de service (ou « QoS architecture »).

On entend ici par « qualité de service », un niveau de service défini par des valeurs de paramètres ou caractéristiques de trafic, tels que l'instabilité (ou « jitter »), le taux de perte de paquets et le retard de transmission de paquets.

Dans les réseaux traditionnels précités, comme par exemple les réseaux à protocole internet (ou réseaux IP), le trafic est traité aussi vite que possible au niveau des routeurs, qu'ils soient de coeur (ou « core router ») ou périphériques (ou « edge router »). Ce type de traitement correspond à un service minimum (ou « best effort service »). Par conséquent, dans ce type de réseau on ne peut pas garantir la qualité de service (QoS) pour chaque flux de paquets de données, ou au moins pour chaque classe de trafic.

On entend ici par « flux de paquets de données » un flux dans lequel tous les paquets comportent dans leur entête un même identifiant de flux, constitué généralement de cinq « tuples » (l'adresse IP de la source, l'adresse IP de destination, l'identifiant du protocole de transmission (ou transport), le port dédié au protocole de transmission de la source, et le port dédié au protocole de transmission de la destination).

Par ailleurs, on entend ici par « classe de trafic » soit un trafic du type dit « flux par flux » dans lequel les flux sont traités indépendamment les uns des autres en fonction de leur identifiant de flux, soit un trafic du type dit « agrégat de flux » dans lequel les flux sont regroupés sous la forme d'agrégats définissant généralement des classes désignées par un identifiant de classe intégré dans l'entête des paquets.

Afin de permettre une prise en compte partielle de la qualité de service au sein des réseaux internet, plusieurs architectures QoS ont été proposées, et notamment les architectures dites « à services intégrés » (ou IntServ), les architectures dites « à services différenciés » (ou DiffServ), et les architectures dites « à état dynamique des paquets » (ou DPS pour « Dynamic Packet State »).

Dans une architecture de type IntServ, une réservation de ressources internes est effectuée au niveau de chaque routeur du réseau pour chaque flux de paquets.

On entend ici par « ressources internes » des ressources propres à un routeur, comme par exemple des zones de mémoire tampon, ou des capacités de lien, ou encore du temps de calcul (CPU) disponible.

Dans une architecture IntServ, chaque routeur placé sur le trajet d'un flux doit stocker une information d'état représentative de la qualité de service associée à ce flux. Chaque flux est identifié par l'identifiant de flux placé dans l'entête des paquets (où il occupe 112 bits dans le cas du protocole IPv4 et 304 bits dans le cas du protocole IPv6). Tous les paquets d'un même flux peuvent ainsi recevoir un même service défini par l'information d'état associée audit flux, stockée dans les routeurs placés sur le trajet de ce flux. Dans ce type d'architecture, la qualité de service peut donc être garantie pour chaque flux.

Cependant, dans ce type d'architecture, le nombre d'informations d'état à stocker dans un routeur croît avec le nombre de flux différents qui transitent par ce routeur. Ce stockage requiert donc des traitements importants et monopolise une grande quantité de ressources mémoire au niveau de chaque routeur, et en particulier au niveau des routeurs de coeur. Par conséquent, l'architecture de type IntServ n'est pas bien adaptée à une montée en charge du trafic.

Dans une architecture de type DiffServ, deux à huit classes sont généralement définies, chaque classe étant désignée par un identifiant de classe placé dans l'entête des paquets (où il occupe 6 bits dans le cas des protocoles IPv4 et IPv6). L'identifiant de classe est généralement intégré dans l'entête d'un paquet par le routeur dit d'entrée qui reçoit en premier ce paquet au sein d'un domaine DiffServ. Une réservation de ressources internes est effectuée au niveau de chaque routeur du réseau pour chaque classe. Par conséquent, des paquets appartenant à des classes différentes peuvent recevoir des services différents.

Dans ce type d'architecture, le nombre d'informations d'état que doit stocker chaque routeur est donc égal au nombre de classes. Ce type d'architecture est donc apparemment adapté à une montée en charge du trafic. Lorsque toutes les ressources du routeur sont allouées aux différentes classes, et que les paquets de ces classes sont regroupés au sein d'agrégats de flux, la qualité de service offerte aux flux d'un agrégat peut être affectée par le comportement d'autres flux de la même classe. Par conséquent, la qualité de service ne peut pas être garantie pour chaque flux au sein d'une même classe.

Dans une architecture de type DPS, ce sont les paquets qui transportent l'information d'état de leur flux, afin d'éviter aux routeurs d'avoir à installer et à maintenir les informations d'état de chaque flux en transit. Plus précisément, le routeur d'entrée d'un domaine DPS intègre dans l'entête des paquets l'information d'état (où elle occupe généralement 17 bits). Les routeurs de coeur traitent les paquets en fonction de leur information d'état et de leurs propres informations d'état. Le routeur de coeur peut éventuellement mettre à jour ses propres informations d'état et l'information d'état d'un paquet avant de le retransmettre vers le routeur suivant.

Ce type d'architecture DPS permet donc un traitement par flux, apparemment adapté à une montée en charge du trafic. Mais, il nécessite l'installation dans chaque routeur de coeur d'un schéma de programmation spécifique lui permettant d'effectuer une programmation reposant sur les informations d'état contenues dans les entêtes des paquets.

Aucune architecture connue n'apportant une entière satisfaction, l'invention a donc pour but d'améliorer la situation.

Elle propose à cet effet un routeur, pour un réseau de communications, par exemple à protocole internet (IP), comprenant des moyens de traitement chargés, lorsqu'il reçoit un flux de paquets de données associé à une classe de trafic, de déterminer un état de charge interne de manière à allouer des ressources internes au flux reçu en fonction de sa classe de trafic et de l'état de charge déterminé, afin qu'il puisse être transmis à un autre routeur du réseau.

Le routeur selon l'invention peut comporter des caractéristiques complémentaires qui pourront être prises séparément ou en combinaison, et notamment :

- la classe de trafic peut être choisie parmi le trafic flux par flux et le trafic par agrégat de flux,
- des moyens de traitement chargés, lorsque la charge est importante, d'agréger des flux reçus associés à une même classe de trafic, afin de définir des agrégats locaux, et d'allouer aux agrégats locaux des ressources internes allouées à cette classe de trafic, au moins de façon transitoire. Lorsque la charge est vraiment très importante, les moyens de traitement peuvent même être chargés d'agréger localement des agrégats de flux associés à une même classe de trafic, de manière à définir des agrégats d'agrégats locaux, et d'allouer aux agrégats d'agrégats locaux des ressources internes allouées à cette classe de trafic, au moins de façon transitoire,
- des moyens de traitement chargés, lorsque la charge se réduit (libération de ressources internes allouées à une classe de trafic), de désagréger des flux ou des agrégats de flux de cette classe de trafic, précédemment agrégés localement, puis d'attribuer à ces flux ou agrégats de flux certaines au moins des ressources internes libérées,
- des moyens de traitement chargés, lorsque les paquets d'un flux comportent des informations de qualité de service (QoS) et lorsque l'état de charge le permet, de désagréger des flux précédemment agrégés localement et de leur allouer des ressources locales libérées correspondant aux informations de qualité de service contenues dans leurs paquets respectifs,
- des mémoires permettant de stocker temporairement dans des files d'attente, des paquets reçus et en attente de transmission, en fonction d'un ordre d'arrivée et de la classe de trafic à laquelle ils appartiennent. Dans ce cas, les moyens de traitement sont avantageusement chargés de définir au sein de chaque file d'attente associée à une classe de trafic une zone primaire de stockage dédiée à l'agrégation de flux et au moins une zone secondaire de stockage dédiée à un flux de cette classe de trafic.

- • Les moyens de traitement peuvent alors être agencés de manière à allouer un ensemble choisi de ressources internes à une zone primaire associée à une classe de trafic, puis, à réception de chaque nouveau flux appartenant à cette classe de trafic, à définir une nouvelle zone secondaire et à attribuer à cette zone secondaire une partie choisie des ressources internes initialement allouées à la zone primaire, bien entendu tant que le nombre de zones secondaires demeure inférieur à un seuil choisi. Lorsque toutes les zones secondaires ont été définies, chaque nouveau flux appartenant à la classe de trafic considérée est alors stocké dans la zone primaire associée en vue d'un traitement sous forme d'agrégat de flux.
- • Par ailleurs, lorsque les moyens de traitement détectent la fin d'un flux associé à une zone secondaire, elle-même associée à une classe de trafic, ils réattribuent à la zone primaire qui est associée à cette classe de trafic, l'ensemble des ressources précédemment allouées à la zone secondaire.
- • Avantageusement, les moyens de traitement sont agencés de manière à déterminer un état de charge pour chaque classe de trafic associée à une zone primaire, par numération du nombre de zones secondaires définies, associées à la zone primaire considérée.

L'invention porte en outre sur un procédé de traitement de paquets de données en vue d'un routage au sein d'un réseau de communications, par exemple à protocole internet, comprenant des routeurs chargés, lorsqu'ils reçoivent un flux de paquets de données associé à une classe de trafic, d'allouer à ce flux des ressources internes en fonction de sa classe de trafic, afin qu'il puisse être transmis à au moins un autre routeur du réseau.

Ce procédé se caractérise par le fait qu'il consiste, lorsqu'un flux de paquets est reçu au niveau d'un routeur, à déterminer un état de charge interne de ce routeur, puis à allouer certaines de ses ressources internes au flux reçu en fonction de sa classe de trafic et de l'état de charge déterminé.

Le procédé selon l'invention peut comporter des caractéristiques complémentaires qui pourront être prises séparément ou en combinaison, et notamment :

- la classe de trafic peut être choisie dans un groupe comprenant au moins le trafic flux par flux et le trafic par agrégat de flux,
- lorsque l'état de charge est représentatif d'une charge importante, on peut agréger des flux reçus associés à une même classe de trafic, afin de définir des agrégats locaux, puis allouer à ces agrégats locaux des ressources internes du routeur concerné, allouées à cette classe de trafic, au moins de façon transitoire,

- lorsque l'état de charge est représentatif d'une charge très importante, on peut agréger localement des agrégats de flux associés à une même classe de trafic, afin de définir des agrégats d'agrégats locaux, puis allouer à ces agrégats d'agrégats locaux des ressources internes au routeur concerné, allouées à cette classe de trafic, au moins de façon transitoire,

- en cas de libération de ressources internes au niveau d'un routeur, allouées à une classe de trafic, on peut désagréger des flux ou des agrégats de flux de cette classe de trafic, précédemment agrégés localement, puis attribuer à ces flux ou agrégats de flux désagrégés certaines au moins des ressources internes libérées,

- lorsque les paquets d'un flux comportent des informations de qualité de service (QoS) et lorsque l'état de charge d'un routeur le permet, on peut désagréger des flux précédemment agrégés localement et leur allouer des ressources locales correspondant aux informations de qualité de service contenues dans leurs paquets respectifs,

- en présence de routeurs comprenant des mémoires pouvant stocker temporairement dans des files d'attente, des paquets reçus et en attente de transmission, en fonction d'un ordre d'arrivée et d'une appartenance à une classe de trafic, on peut définir au sein de chaque file associée à une classe de trafic une zone primaire de stockage dédiée à l'agrégation de flux et au moins une zone secondaire de stockage dédiée à un flux de cette classe de trafic.

  • On peut alors allouer un ensemble choisi de ressources internes à une zone primaire associée à une classe de trafic, puis, à réception de chaque nouveau flux appartenant à cette classe de trafic, on peut définir une nouvelle zone secondaire et lui attribuer une partie choisie des ressources initialement allouées à la zone primaire associée, tant que le nombre de zones secondaires demeure inférieur à un seuil choisi. Ainsi, lorsque toutes les zones secondaires ont été définies, on stocke chaque nouveau flux appartenant à la classe de trafic dans la zone primaire associée en vue d'un traitement sous forme d'agrégat de flux.

  • Par ailleurs, en cas de détection d'une fin de flux associé à une zone secondaire associée à une classe de trafic, on peut réattribuer à la zone primaire qui est associée à cette classe de trafic l'ensemble des ressources précédemment allouées à la zone secondaire.

  • On peut avantageusement déterminer un état de charge pour chaque classe de trafic associée à une zone primaire, par numération du nombre de zones secondaires définies, associées à la zone primaire considérée.

D'autres caractéristiques et avantages de l'invention apparaîtront à l'examen de la description détaillée ci-après, et des dessins annexés, sur lesquels :

- la figure 1 illustre de façon schématique un exemple de réseau de communications équipé de routeurs selon l'invention, et
- la figure 2 illustre de façon schématique un exemple de répartition entre quatre classes de trafic différentes des ressources internes d'un routeur selon l'invention.

Les dessins annexés pourront non seulement servir à compléter l'invention, mais aussi contribuer à sa définition, le cas échéant.

L'invention a pour objet de permettre l'adaptation de la qualité de service (QoS) appliquée aux paquets de données, au niveau des routeurs d'un réseau de communications, capable de traiter des agrégats de flux et des flux de paquets de données, en fonction de l'état de charge des routeurs. Dans ce qui suit on considérera à titre d'exemple illustratif que le réseau est un réseau à protocole internet (ou réseau IP).

On entend ici par « réseau IP » un contexte multidomaines constitué d'une somme de domaines IP raccordés les uns aux autres.

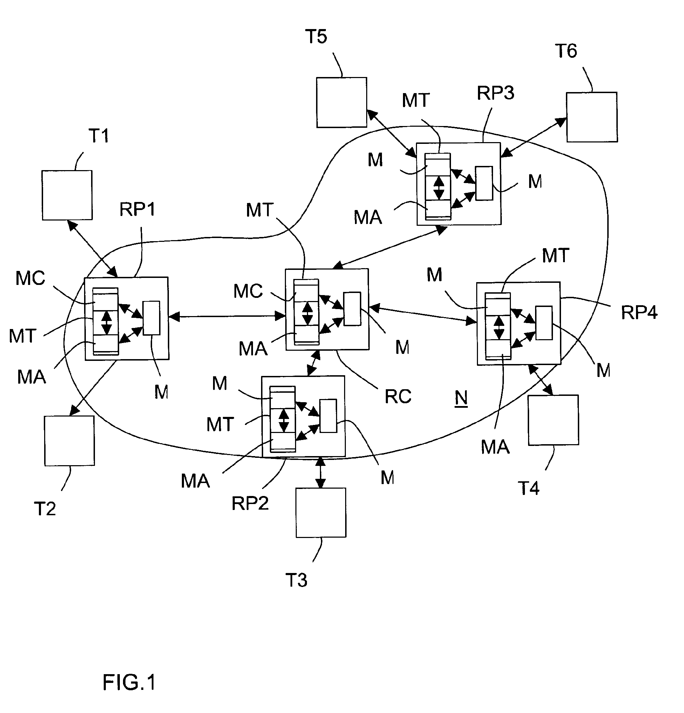

Comme cela est illustré sur la figure 1, un réseau IP N peut être schématiquement assimilé à un ensemble d'équipements de commutation (ou noeuds) RPi et RC, raccordés entre eux de manière à assurer le routage de paquets de données qu'ils reçoivent, et à un ensemble de terminaux de communication Tj, raccordés à certains équipements de communication (ou noeuds) RPi, éventuellement via un ou plusieurs autres terminaux de type serveur d'accès, de manière à échanger entre eux des paquets de données.

Les équipements de commutation (ou noeuds) sont généralement des routeurs périphériques (ou « edge routers ») RPi (ici i = 1 à 4, mais il peut prendre n'importe quelle valeur supérieure ou égale à un), et des routeurs de coeur (ou « core routers »). Ici, un seul routeur de coeur RC a été représenté, mais il peut y en avoir plusieurs. Dans un réseau IP, chaque domaine possède ses propres routeurs périphériques RPi et ses propres routeurs de coeur.

Les terminaux de communication Tj sont habituellement raccordés chacun à l'un des routeurs périphériques RPi, qui leur servent de noeud d'accès au réseau internet, et les réseaux périphériques RPi sont généralement reliés entre eux par l'intermédiaire d'un ou plusieurs routeurs de coeur RC.

On entend ici par « terminal de communication » Tj (ici j = 1 à 6, mais il peut prendre n'importe quelle valeur supérieure ou égale à deux), tout équipement de réseau capable d'échanger des paquets de données, comme par exemple un ordinateur portable ou fixe, un téléphone fixe ou mobile, un assistant personnel numérique (ou PDA pour « Personal Digital Assistant »), ou un serveur.

Afin de permettre l'adaptation précitée de la qualité de service (QoS) en fonction de la charge des routeurs, le réseau IP N est équipé au moins de routeurs de coeur RC mettant en oeuvre l'invention. Mais, comme illustré sur la figure 1, il est préférable que ses routeurs périphériques RPi mettent également en oeuvre l'invention.

Dans ce qui suit, tous les routeurs périphériques RPi et tous les routeurs de coeur RC mettant en oeuvre l'invention, à titre d'exemple illustratif, ils ne feront plus l'objet d'une différenciation.

Un routeur RPi ou RC, selon l'invention, comporte un module de traitement MT chargé, lorsqu'il reçoit un flux de paquets de données, de déterminer un état de charge interne.

Un état de charge de routeur RPi ou RC est représentatif du pourcentage d'allocation d'une partie au moins de ses ressources internes. Comme indiqué dans l'introduction, les ressources internes d'un routeur sont par exemple des zones de mémoire tampon M, généralement de type FIFO (pour « First In First Out »), ou des capacités de liens (ou liaisons) avec d'autres routeurs, ou encore du temps de calcul (CPU) pour effectuer des tâches (ou traitements).

Le module de traitement MT d'un routeur RPi ou RC, selon l'invention, est également chargé, lorsqu'il reçoit un flux de paquets de données associé à une classe de trafic, d'allouer à ce flux certaines ressources internes en fonction de sa classe de trafic et de l'état de charge qui vient d'être déterminé, afin qu'il puisse être transmis à un autre routeur du réseau N.

Préférentiellement et comme illustré sur la figure 1, le module de traitement MT est décomposé en au moins deux modules : un module d'analyse MA, chargé de déterminer l'état de charge interne du routeur, et un module d'allocation MC, chargé d'allouer les ressources internes. Mais, cette décomposition du module de traitement MT en au moins deux modules d'analyse MA et d'allocation MC n'est pas obligatoire.

Comme indiqué dans l'introduction, l'invention concerne toute classe de trafic, et notamment les trafics flux par flux (équivalant à IntServ) dans lesquels les flux sont traités indépendamment les uns des autres en fonction de l'identifiant de flux intégré dans l'entête des paquets, les trafics d'agrégat(s) de flux (équivalant à DiffServ) dans lesquels les flux sont regroupés sous la forme d'agrégats définissant généralement des classes désignées par un identifiant de classe intégré dans l'entête des paquets, et tous les trafics intermédiaires (équivalant à DPS) dans lesquels les paquets sont traités en fonction de bits d'information choisis intégrés dans leur entête.

Par exemple, dans un trafic de type IntServ l'identifiant de flux (« flow ID ») comporte 112 bits dans la version de protocole IPv4 et 304 bits dans la version de protocole IPv6. Par ailleurs, dans un trafic de type DiffServ l'identifiant de classe comporte par exemple 6 bits (« DS field »). Et, dans un trafic intermédiaire l'identifiant comporte par exemple de 6 à 112 bits (17 bits dans le cas d'un trafic DPS).

Il est important de noter que dans un routeur RPi ou RC selon l'invention le module de traitement MT, et plus préférentiellement son module d'allocation MC, peut, par exemple, définir de façon dynamique ses propres classes (de trafic). Ainsi, une classe peut être associée à un unique flux ou à plusieurs, ou à un agrégat de flux local, ou encore à un agrégat d'agrégats de flux local. Par ailleurs, des classes peuvent être combinées lorsque la charge du routeur, en termes de ressources internes, est momentanément trop importante. De plus, chaque module de traitement MT définissant ses propres classes, un flux peut être associé à des classes différentes au sein de routeurs différents qui se trouvent sur son trajet, et un flux peut être associé à des classes différentes à des instants différents au sein d'un même routeur.

Ainsi, lorsqu'un routeur RPi ou RC reçoit un paquet d'un nouveau flux, le module d'allocation MC de son module de traitement MT décide de le traiter en mode flux (équivalant à IntServ) ou en mode agrégat (équivalant à DiffServ), par exemple, en fonction de l'état de charge déterminé par le module d'analyse MA associé.

Si le routeur dispose de suffisamment de ressources internes, son module d'allocation MC va alors allouer une partie d'entre elles au nouveau flux afin qu'il soit traité en mode flux. Les paquets de ce flux seront alors traités en fonction de leur identifiant de flux.

En revanche, si le routeur ne dispose pas de suffisamment de ressources internes, son module d'allocation MC va alors associer le nouveau flux à une classe qu'il a précédemment définie de sorte qu'il soit traité avec les autres flux de cette classe en mode agrégat de flux. Les paquets de ce flux seront alors traités en fonction de leur identifiant de classe.

L'état de charge d'un routeur RPi ou RC variant généralement au cours du temps, chaque module de traitement MT est préférentiellement agencé de manière à redéfinir dynamiquement l'allocation des ressources internes.

Par exemple, lorsqu'un flux de paquets ou un agrégat de flux a été intégralement routé par un routeur RPi ou RC, les ressources internes qui lui avaient été associées peuvent être réaffectées à un flux d'un agrégat ou à un agrégat de flux qui n'a pas encore été intégralement routé (localement).

Pour mettre en oeuvre cette réaffectation de ressources internes, le module de traitement MT, et plus préférentiellement son module d'allocation MC, analyse préférentiellement les informations qui définissent la qualité de service (QoS) dans l'entête des paquets du (ou des) flux concerné(s) par la réaffectation. Dans ce mode de réalisation, seuls les flux dont les paquets comportent des informations de qualité de service pourront faire l'objet d'une réaffectation locale de ressources internes.

Une réaffectation inverse est également possible. En effet, lorsqu'un nouveau flux ou un nouvel agrégat de flux parvient au niveau d'un routeur RPi ou RC et que son état de charge ne permet pas de lui allouer des ressources internes suffisantes (état de charge trop important), son module d'allocation MC doit soit définir une nouvelle classe dédiée au nouveau flux ou nouvel agrégat de flux et réaffecter à cette nouvelle classe une partie des ressources internes précédemment affectées à une ancienne classe, soit définir une nouvelle classe à partir d'une ancienne classe en agrégeant le nouveau flux ou le nouvel agrégat de flux au flux ou à l'agrégat de flux associé à cette ancienne classe et réaffecter à cette nouvelle classe une partie des ressources internes précédemment affectées à l'ancienne classe. Bien entendu, ce type de réaffectation ne peut se faire qu'à condition que les anciens et nouveaux flux comprennent des paquets comportant un identifiant de classe et/ou un identifiant de flux sensiblement identiques.

Lorsque des ressources internes se libèrent, le module d'allocation MC peut également désagréger des flux qu'il avait précédemment agrégés du fait de l'état de charge antérieur de son routeur et allouer à ces flux désagrégés des ressources locales correspondant aux informations de qualité de service contenues dans leurs paquets respectifs. Ainsi, les paquets des flux désagrégés passent d'un mode de traitement de type agrégat à un mode de traitement de type flux.

Comparé à un mode de traitement de type Int-Serv, le mode de traitement offert par l'invention permet une montée en charge. Lorsqu'un routeur RPi ou RC est saturé (et donc qu'il ne dispose plus de ressources internes disponibles), chaque nouveau flux reçu est traité en mode agrégat, ce qui évite d'accroître la quantité d'informations d'état qu'il doit stocker.

Comparé à un mode de traitement de type Diff-Serv, le mode de traitement offert par l'invention permet de traiter en mode flux le plus grand nombre possible de flux, les autres flux étant traités en mode agrégat. En fait, un flux est au pire traité en mode agrégat par tous les routeurs du réseau, si bien que ses paquets reçoivent tous un service de type DiffServ. Mais, dans la meilleure des situations, tous les paquets d'un flux peuvent également être traités en mode flux par tous les routeurs du réseau, si bien que ses paquets reçoivent tous un service de type IntServ. Dans la plupart des cas, on se trouve dans une situation intermédiaire dans laquelle le service reçu par les paquets d'un flux, sur l'ensemble d'un trajet entre des noeuds source et destination, est compris entre les services DiffServ et IntServ.

Ainsi, grâce à l'invention, les paquets d'un flux ne sont plus traités au minimum, comme dans l'art antérieur, mais au mieux compte tenu de la charge de chaque routeur RPi ou RC. Certes, un flux initialement traité en mode flux par un routeur peut être momentanément traité en mode agrégat par ce même routeur, ce qui peut être de nature à limiter la qualité de service offerte localement (au niveau de ce seul routeur). Mais, un flux initialement traité en mode agrégat par un routeur peut être momentanément traité en mode flux par ce même routeur, ce qui peut être de nature à améliorer la qualité de service offerte localement (au niveau de ce seul routeur).

L'invention offre également une méthode de détermination d'un état de charge d'un routeur RPi ou RC.

Il est en effet possible d'analyser en permanence, à l'aide du module de traitement MT, et plus précisément à l'aide de son module d'analyse MA, toutes les ressources internes d'un routeur RPi ou RC. Mais, comme on va le voir ci-après, il est également possible de procéder différemment.

Comme le sait l'homme de l'art, lorsqu'un routeur reçoit un paquet d'un flux, il doit tout d'abord déterminer le lien (ou la liaison) de sortie qu'il va utiliser pour le transmettre à un autre routeur du réseau, compte tenu de son adresse de destination et de la table de routage qu'il stocke. A chaque lien de sortie sont généralement associées plusieurs files d'attente correspondant à des services de transmission différents.

On entend ici par « file d'attente » une zone d'une mémoire M de type FIFO permettant de traiter les paquets en fonction de leur ordre d'arrivée et de l'identifiant de flux ou de l'identifiant de classe contenu dans leur entête. En d'autres termes une file d'attente est habituellement dédiée à un flux ou un agrégat de flux.

Une fois que le lien de sortie d'un paquet reçu a été déterminé, le module d'allocation MC, du module de traitement MT d'un routeur RPi ou RC, détermine la file d'attente dans laquelle il va placer le paquet compte tenu de l'identifiant de flux ou de l'identifiant de classe contenu dans son entête.

L'invention propose d'estimer l'état de charge d'un routeur RPi ou RC en fonction du nombre de files d'attente « actives » au sein de ses mémoires tampon M. On entend ici par « active » une file d'attente (ou zone de mémoire M) qui a déjà été dédiée à un flux dont les paquets sont en cours de routage au sein d'un routeur RPi ou RC.

Plus précisément, le module d'allocation MC est chargé d'associer une zone mémoire à chaque classe qu'il définit, et d'associer à chaque zone mémoire des ressources internes, du routeur RPi ou RC dans lequel il est implanté, adaptées à la qualité de service requise par les paquets du ou des flux de la classe associée.

Par exemple, si un flux f est associé dans un routeur à une classe n°k, elle-même associée à une zone mémoire q, chaque paquet appartenant à ce flux et identifié par son identifiant de flux f, est stocké temporairement dans la file d'attente de la zone mémoire q en vue d'être transmis quand son tour viendra.

Lorsque le flux f a été entièrement routé par le routeur considéré, son module d'allocation MC supprime la classe n°k et de ce fait libère la zone mémoire q.

Un flux ou un agrégat de flux étant associé à chaque file d'attente active, chaque routeur RPi ou RC doit donc stocker une information d'état pour chaque file d'attente active.

Si l'on considère qu'un routeur RPi ou RC dispose initialement de N files d'attente dans ses mémoires M, compte tenu des ses ressources internes, chaque fois que son module d'allocation MC crée une classe n°k, il met à disposition de cette classe n°k une zone mémoire q qui peut être subdivisée en $n_k$ files d'attente (ou sous-zones).

On a alors la relation :

$$N = \sum_k n_k \ .$$

Le nombre $n_k$ de files d'attente n'est pas nécessairement constant entre classes. Ce nombre peut par exemple dépendre du niveau de priorité de la classe ou d'une politique de gestion.

Préférentiellement, chaque zone mémoire q, associée à une classe n°k, comporte au minimum une file d'attente dédiée au traitement des paquets en mode agrégat de flux, et appelée zone primaire. Par conséquent, une zone mémoire q peut comporter simultanément au plus $n_k$ - 1 files d'attente dédiées au traitement des paquets en mode flux, et appelées zones secondaires.

Lors de la création d'une nouvelle classe n°k, seule la zone primaire d'agrégation est définie dans la zone mémoire associée à cette classe. Toutes les ressources internes allouées à cette classe n°k sont donc initialement attribuées à la zone primaire d'agrégation. Si la classe n°k est associée à plusieurs flux, dès qu'un nouveau flux de cette classe n°k est reçu, le module d'allocation MC définit une zone secondaire afin que les paquets de ce nouveau flux soient traités en mode flux. Chaque flux suivant de cette classe n°k fait également l'objet d'une association à une nouvelle zone secondaire, tant que le nombre maximal nk - 1 de zones secondaires n'a pas été atteint. Si un flux supplémentaire de cette classe n°k parvient au niveau du routeur considéré, le module d'allocation MC l'associe à la zone primaire d'agrégation et tous ses paquets seront traités en mode agrégat.

Chaque fois qu'une zone secondaire de flux est créée, l'information d'état du flux associé est stockée dans la mémoire du routeur RPi ou RC, dédiée à cet effet.

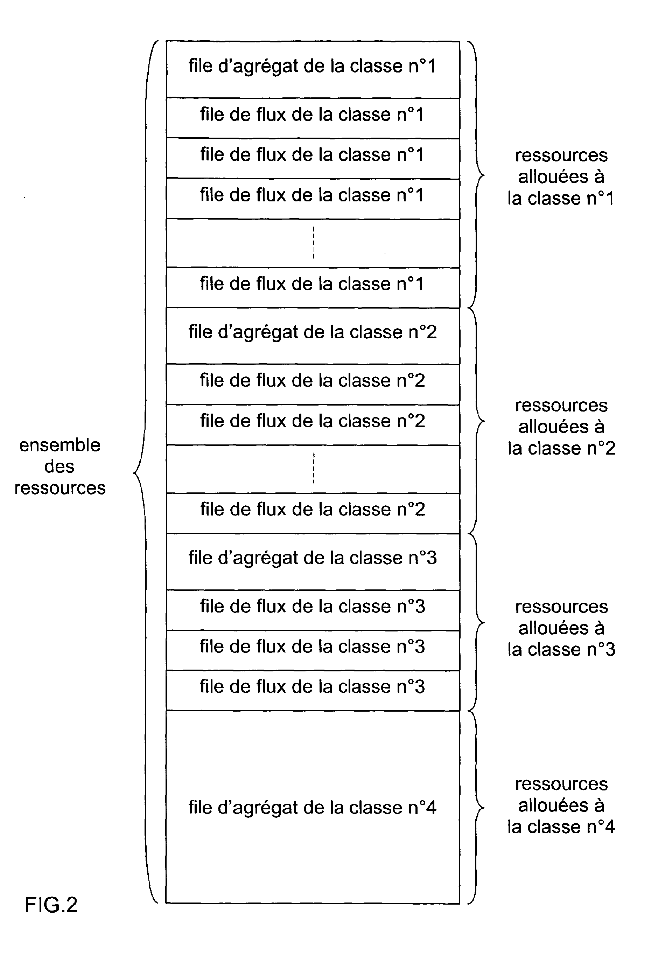

On a représenté sur la figure 2 un exemple de répartition entre quatre classes de trafic différentes des ressources internes d'un routeur RPi ou RC selon l'invention.

Plus précisément, dans cet exemple, d'une première part, les ressources allouées à la classe n°1 ont été réparties entre une zone primaire d'agrégation (« file d'agrégat de la classe n°1 ») et $n_1$ -1 zones secondaires de flux (« file de flux de la classe n°1 »), d'une deuxième part, les ressources allouées à la classe n°2 ont été réparties entre une zone primaire d'agrégation (« file d'agrégat de la classe n°2 ») et $n_2$ -1 zones secondaires de flux (« file de flux de la classe n°2 »), d'une troisième part, les ressources allouées à la classe n°3 ont été réparties entre une zone primaire d'agrégation (« file d'agrégat de la classe n°3 ») et $n_3$ -1 = 3 zones secondaires de flux (« file de flux de la classe n°3 »), et d'une quatrième part, les ressources allouées à la classe n°4 ont toutes été attribuées à la zone primaire d'agrégation (« file d'agrégat de la classe n°4 ») soit par ce que les $n_4$ -1 flux précédemment associés aux zones secondaires de flux ont tous été intégralement routés, soit par ce que la classe n°4 vient tout juste d'être définie.

Lorsqu'un flux f d'une classe n°k a été entièrement routé par le routeur considéré, son module d'allocation MC « supprime » la zone secondaire qui lui était associée et réaffecte ses ressources internes à la zone primaire d'agrégation associée à la classe n°k.

Il en va de même lorsque la charge du routeur est trop importante et qu'il est confronté à un afflux de flux ou d'agrégats de flux. Dans ce cas, le module d'allocation MC de son module de traitement MT peut décider, comme indiqué précédemment, d'associer un ou plusieurs flux d'une classe, précédemment associés à des zones secondaires, à la zone primaire de cette classe. Cela permet de libérer les ressources internes qui avaient été affectées aux zones secondaires pour les réaffecter à une nouvelle classe associée aux nouveaux flux.

Chaque fois qu'une zone secondaire de flux est supprimée, l'information d'état du flux associé est supprimée de la mémoire du routeur RPi ou RC, dédiée à cet effet.

Les files d'attente actives au sein d'un routeur étant associées chacune à certaines ressources internes de ce routeur, le nombre de files d'attente actives est donc représentatif de l'état de charge d'un routeur RPi ou RC.

Il suffit donc au module d'analyse MA du module de traitement MT de compter le nombre de zones secondaires utilisées pour chaque classe pour connaître le nombre total de zones secondaires utilisées et en déduire l'état de charge de son routeur RPi ou RC.

Il est important de noter que les classes peuvent être définies au sein d'un routeur de façon statique, par exemple par l'opérateur du réseau (ou domaine) auquel il appartient, ou bien de façon dynamique. Dans le cas statique, certaines classes sont dédiées au traitement de paquets en mode agrégat, tandis que d'autres classes sont dédiées au traitement de paquets en mode agrégat et en mode flux. Dans le cas dynamique, le routeur adapte ou crée ses classes en fonction des besoins.

Les routeurs RPi et RC selon l'invention, et notamment leurs modules de traitement MT, modules d'allocation MC et modules d'analyse MA, ainsi qu'éventuellement leurs mémoires M de type FIFO, peuvent être réalisés sous la forme de circuits électroniques, de modules logiciels (ou informatiques), ou d'une combinaison de circuits et de logiciels.

L'invention offre également un procédé de traitement de paquets de données en vue d'un routage au sein d'un réseau de communications N, par exemple de type IP, comprenant des routeurs RPi et/ou RC chargés, lorsqu'ils reçoivent un flux de paquets de données associé à une classe de trafic, d'allouer à ce flux des ressources internes en fonction de sa classe de trafic, afin qu'il puisse être transmis à au moins un autre routeur du réseau.

Celui-ci peut être notamment mis en oeuvre à l'aide des routeurs RPi et RC présentés ci-avant. Les fonctions et sous-fonctions principales et optionnelles assurées par les étapes de ce procédé étant sensiblement identiques à celles assurées par les différents moyens constituant les routeurs RPi et RC, seules seront résumées ci-après les étapes mettant en oeuvre les fonctions principales du procédé selon l'invention.

Ce procédé consiste, lorsqu'un flux de paquets est reçu au niveau d'un routeur RPi ou RC, à déterminer un état de charge interne de ce routeur, puis à allouer certaines de ses ressources internes au flux reçu en fonction de sa classe de trafic et de l'état de charge déterminé.

L'invention ne se limite pas aux modes de réalisation de routeurs et de procédé de traitement décrits ci-avant, seulement à titre d'exemple, mais elle englobe toutes les variantes que pourra envisager l'homme de l'art dans le cadre des revendications ci-après.

**Revendications**

1. Routeur (RP, RC) pour un réseau de communications (N), comprenant des moyens de traitement (MT) propres, à réception d'un flux de paquets de données associé à une classe de trafic, à allouer audit flux des ressources internes dudit routeur en fonction de sa classe de trafic afin qu'il soit transmis à au moins un autre routeur dudit réseau, **caractérisé en ce que** lesdits moyens de traitement (MT) sont agencés pour déterminer un état de charge interne dudit routeur, et pour allouer des ressources internes à un flux reçu en fonction de sa classe de trafic et dudit état de charge déterminé, ladite classe de trafic étant choisie dans un groupe comprenant au moins le trafic « flux par flux » et le trafic par « agrégat de flux ».

2. Routeur selon la revendication précédente **caractérisé en ce que** lesdits moyens de traitement (MT) sont agencés pour agréger des flux reçus associés à une même classe de trafic, de manière à définir des agrégats locaux, et pour allouer auxdits agrégats locaux des ressources internes allouées à une classe de trafic, au moins de façon transitoire.

3. Routeur selon la revendication 2, **caractérisé en ce que** lesdits moyens de traitement (MT) sont agencés pour agréger localement des agrégats de flux associés à une même classe de trafic, de manière à définir des agrégats d'agrégats locaux, et pour allouer auxdits agrégats d'agrégats locaux des ressources internes allouées à ladite classe de trafic, au moins de façon transitoire.

4. Routeur selon l'une des revendications 2 et 3, **caractérisé en ce que** lesdits moyens de traitement (MT) sont agencés, en cas de libération de ressources internes allouées à une classe de trafic, pour désagréger des flux ou des agrégats de flux précédemment agrégés localement, puis pour attribuer auxdits flux ou agrégats de flux certaines au moins desdites ressources internes libérées.

5. Routeur selon l'une des revendications 1 à 4, **caractérisé en ce que** lesdits moyens de traitement (MT) sont agencés, lorsque lesdits paquets d'un flux comportent des informations de qualité de service et lorsque l'état de charge le permet, pour désagréger des flux précédemment agrégés localement et leur allouer des ressources locales correspondant auxdites informations de qualité de service contenues dans leurs paquets respectifs.

6. Routeur selon l'une des revendications 1 à 5, **caractérisé en ce qu'**il comprend des mémoires (M) propres à stocker temporairement dans des files d'attente des paquets reçus et à transmettre, en fonction d'un ordre d'arrivée et d'une appartenance à une classe de trafic, et **en ce que** lesdits moyens de traitement (MT) sont agencés pour définir au sein de chaque file d'attente associée à une classe de trafic une zone primaire de stockage dédiée à l'agrégation de flux et au moins une zone secondaire de stockage dédiée à un flux de cette classe de trafic.

7. Routeur selon la revendication 6, **caractérisé en ce que** lesdits moyens de traitement (MT) sont agencés pour allouer un ensemble choisi de ressources internes à une zone primaire associée à une classe de trafic, puis, à réception de chaque nouveau flux appartenant à ladite classe de trafic, à définir une nouvelle zone secondaire et à attribuer à cette zone secondaire une partie choisie desdites ressources initialement allouées à ladite zone primaire, tant que le nombre de zones secondaires est inférieur à un seuil choisi, et lorsque toutes les zones secondaires ont été définies, chaque nouveau flux appartenant à ladite classe de trafic est stocké dans ladite zone primaire en vue d'un traitement sous forme d'agrégat de flux.

8. Routeur selon la revendication 7, **caractérisé en ce que** lesdits moyens de traitement (MT) sont agencés, en cas de détection d'une fin de flux associé à une zone secondaire associée à une classe de trafic, pour réattribuer à ladite zone primaire, associée à ladite classe de trafic, l'ensemble des ressources précédemment allouées à ladite zone secondaire.

9. Routeur selon l'une des revendications 6 à 8, **caractérisé en ce que** lesdits moyens de traitement (MT) sont agencés pour déterminer un état de charge pour chaque classe de trafic associée à une zone primaire, par numération du nombre de zones secondaires définies, associées à ladite zone primaire.

10. Procédé de traitement de paquets de données en vue d'un routage au sein d'un réseau de communications (N) comprenant des routeurs (RP, RC) propres, à réception d'un flux de paquets de données associé à une classe de trafic, à allouer audit flux des ressources internes en fonction de sa classe de trafic afin qu'il soit transmis à au moins un autre routeur dudit réseau, **caractérisé en ce qu'**il consiste, à réception d'un flux de paquets au niveau d'un routeur (RP, RC), à déterminer un état de charge interne dudit routeur, puis à allouer des ressources internes audit flux reçu en fonction de sa classe de trafic et dudit état de charge déterminé, ladite classe de trafic étant choisie dans un groupe comprenant au moins le trafic « flux par flux » et le trafic par « agrégat de flux ».

11. Procédé selon la revendication précédente, **caractérisé en ce que**, lorsque l'état de charge est représentatif d'une charge importante, on agrège des flux reçus associés à une même classe de trafic, de manière à définir des agrégats locaux, puis on alloue auxdits agrégats locaux des ressources internes du routeur concerné, allouées à ladite classe de trafic, au moins de façon transitoire.

12. Procédé selon la revendication 11, **caractérisé en ce que**, lorsque l'état de charge est représentatif d'une charge très importante, on agrège localement des agrégats de flux associés à une même classe de trafic, de manière à définir des agrégats d'agrégats locaux, puis on alloue auxdits agrégats d'agrégats locaux des ressources internes du routeur concerné, allouées à ladite classe de trafic, au moins de façon transitoire.

13. Procédé selon l'une des revendications 11 et 12, **caractérisé en ce qu'**en cas de libération de ressources internes allouées à une classe de trafic au niveau d'un routeur (RP, RC), on désagrège des flux ou des agrégats de flux précédemment agrégés localement, puis on attribue auxdits flux ou agrégats de flux certaines au moins desdites ressources internes libérées.

14. Procédé selon l'une des revendications 10 à 13, **caractérisé en ce que**, lorsque lesdits paquets d'un flux comportent des informations de qualité de service et lorsque l'état de charge d'un routeur (RP, RC) le permet, on désagrège des flux précédemment agrégés localement et on leur alloue des ressources locales correspondant auxdites informations de qualité de service contenues dans leurs paquets respectifs.

15. Utilisation du routeur et du procédé, selon l'une des revendications précédentes, dans les réseaux à protocole internet (IP).

FIG.1

| file d'agrégat de la classe n°1 |
|---|
| file de flux de la classe n°1 |
| file de flux de la classe n°1 |
| file de flux de la classe n°1 |
| ¦ |
| file de flux de la classe n°1 |
| file d'agrégat de la classe n°2 |
| file de flux de la classe n°2 |
| file de flux de la classe n°2 |
| ¦ |
| file de flux de la classe n°2 |
| file d'agrégat de la classe n°3 |
| file de flux de la classe n°3 |
| file de flux de la classe n°3 |
| file de flux de la classe n°3 |
| file d'agrégat de la classe n°4 |

ensemble des ressources

ressources allouées à la classe n°1

ressources allouées à la classe n°2

ressources allouées à la classe n°3

ressources allouées à la classe n°4

FIG.2